# EUROPEAN PATENT APPLICATION

(11) **EP 1 269 854 A1**
(43) Date of publication of application: **02.01.2003**
(21) Application number: 01202518.5
(22) Date of filing: 29.06.2001
(51) Int. Cl.: A23C 9/154, A23C 9/156, A23C 9/137, A23L 2/38, A23L 2/70

(54) **Clear dairy drink and method for producing same**

(71) Applicant: Camoina Melkunic B.V., 5301 LB Zaltbommel (NL)
(72) Inventor: Kloek, William, 5467 BR Veghel (NL); Smits, Antonius, Maria, Gerardus, 5406 TP Uden (NL); Zuidberg, Antien, Frances, 5262 BK Vught (NL)
(74) Representative: Van Someren, Petronella F. H. M.

(57) **Abstract**

The present invention relates to a clear dairy drink, comprising a milk product as the main ingredient and having an extinction in the range of 400 to 800 nm, in particular at 654 nm of less than 1 and to a method for making such drink. The method for producing the drink comprises provision of a mixture of acid pH, which comprises a negatively charged polysaccharide and a milk product; optionally subjecting the mixture to a temperature treatment and/or homogenisation, and adjusting the pH of the mixture to about neutral.

## Description

The present invention relates to a clear dairy drink and a method for producing the drink.

In the food and drink industry there is a tendency to produce healthier products. On the other hand however, especially younger consumers prefer products having a more modern and dynamic image. Healthy products do not usually meet these requirements.

Dairy products, such as milk, are for example generally considered to be a healthy drink. Younger consumers do however usually prefer clear soft drinks. It is therefore the object of the present invention to provide a clear drink based on milk.

In the research for a clear milk beverage, it was surprisingly found that adjusting the pH of an acidified milk drink comprising pectin to near neutral resulted in a clear dairy drink.

The object stated above is thus achieved according to the invention by a clear dairy drink, comprising a milk product as the main ingredient and having an extinction in the range from more than 400 to 800 nm of less than 1 measured in a quartz cell having an optical path length of 1 cm. The extinction in this nanometer range is preferably less than 0.8, more preferably less than 0.6, even more preferably less than 0.4, most preferably less than 0.2. It was found that 654 nm is particularly useful for measuring the extinction.

The preparation of clear whey protein-based beverages is known in the art (e.g. US 5,641,531). However, this concerns an acid beverage, using defatted whey protein isolate and does not mention the use of a negatively charged polysaccharide such as pectin.

A clear dairy drink according to the invention can be obtained by a method comprising the steps of:
a) providing a mixture of a negatively charged polysaccharide and a milk product of acid pH;
b) optionally subjecting the mixture to a temperature treatment and/or an optional homogenisation treatment, and
d) adjusting the pH of the mixture to about neutral.

The provision of the mixture of a negatively charged polysaccharide and a milk product of acid pH is for example achieved by mixing pectin and milk and adjusting the pH of the mixture to about 3.8 to 4.2, preferably to about 4.

Alternatively, the provision of the mixture of a negatively charged polysaccharide and a milk product of acid pH is achieved by mixing pectin and butter milk or yoghurt. The milk products used here already have an acid pH around 4.

"Milk product" as used in this application is intended to comprise low-fat milk, skimmed milk, buttermilk and yoghurt. It is preferred to use milk having less than 0.5% fat.

The negatively charged polysaccharide is selected from the group consisting of pectin, alginate, carboxy methyl cellulose and polyglycol alginate, and is preferably pectin.

Pectin is usually classified according to its degree of esterification (DE). There are two main categories, namely low (methyl) ester (LM) pectin, having a DE of less than 50% and high (methyl) ester (HM) pectin having a DE of more than 50%. According to the invention pectin is used to stabilise the acidified protein during processing. For this function, both pectin types are suitable.

In addition to a milk product and a negatively charged polysaccharide such as pectin, the mixture may further comprise one or more of the ingredients selected from the group consisting of sugar, fruit juice, fruit mix (a clear mixture of mashed fruits in which there may still be some cell material present), flavours, food-grade acids, such as lactic acid, malic acid, citric acid or mixtures thereof, stabilisers, colorants, non-caloric sweeteners, maltodextrins, non-digestible fibers, nutritional ingredients, etc. Sugar can be used for adjusting the taste but also as a dispersion aid for pectin. Fruit juice and/or fruit mix are added to obtain the desired taste.

The main ingredient of the invention is the milk product as defined above. The ratio between the milk product and the other ingredients may be 80:20, preferably 65:35, more preferably 60:40. In dairy drinks of a low protein content the ratio varies from 40:60 to 35:65 to 20:80.

The amount of HM pectin based on the amount of the clear dairy drink lies between 0.10 and 0.55% (w/w), preferably between 0.35 and 0.45% (w/w) and is most preferably about 0.40% (w/w). The amount of LM pectin based on the amount of the clear dairy drink lies between 0.01 and 0.15% (w/w), preferably about 0.05% (w/w).

The about neutral pH to which the drink is adjusted to make it transparent is a pH between about 6 and 7.5, preferably about 6.5 and 7, more preferably about 6.75. It is preferred to use food grade means to adjust the pH back to neutral.

It was found that after adjusting the pH to an acidic value energy may optionally be added to the drink. Energy can be administered in the form of shear. High shear can be administered to the drink by means of a homogenisation treatment. An additional homogenisation may be performed either before or after adjusting the pH of the drink to about neutral. Preferably, the temperature of the homogenisation step is approximately 55°C. The homogenisation treatments are performed at 150-250 bar, preferably 250 bar. Either of the two homogenisation treatments may also be performed more than once.

To safeguard a hygienic condition of the drink, it can optionally be heat treated, e.g. pasteurised. Such pasteurisation is a treatment of 10-20, preferably 15 seconds at 85-95°C, preferably 90°C. Alternatively, the drink can be microfiltered using an 0.2 µm filter to remove bacteria. An additional advantage of this filtering step is also that the extinction of the drink is lowered even further.

It was surprisingly found that a certain storage time at low temperature below 10°C, preferably below 8°C, optimally at 5°C during about 4 days, further increased the transparency of the drink. After heating the drink becomes again milky white. This effect can be reversed by cooling. Thus, the transparency induced by cooling is reversible.

The drink according to the invention can also be used as a basis for special nutritional applications, e.g. sports or diet drinks. Ingredients that may then be added in the process of making the clear drink, are e.g. peptide preparations enriched in specific amino acids. Only those nutritional ingredients will be used that will not reduce the clarity of the product. For example, the clear glutamine peptide WGE80GPA (from DMV International, the Netherlands) can be incorporated in such a drink.

It is furthermore possible to add lactic acid or probiotic bacteria. These should be added after the pasteurisation or microfiltration treatment in an amount that will not make the drink turbid again.

The present invention is further illustrated in the Examples that follow. In the Examples 1-6 HM pectin (type JM 150; Hercules - Copenhagen (Denmark)) was used.

### EXAMPLES

### EXAMPLE 1

### General recipe for clear milk drink

The recipe for 1 kg milk drink of the invention is as follows.

4 g Pectin and 20 g sugar are mixed in dry form. The mixture thus obtained is dispersed in 267 g water at 80°C in a vortex and hydrated at the same temperature for 2 hours.

605 g skimmed UHT-milk is cooled to 4°C and 24 g sugar is added. The milk/sugar solution and pectin/sugar solution are mixed leading to a temperature of 20-25°C. The solution thus obtained is quickly cooled to 4°C in ice water.

An additional amount of either 80 g fruit concentrate or water is added. 20% (W/w) citric acid was added until a pH of 4 was reached.

After a pasteurisation treatment during 15 sec. at 90°C, the solution is cooled to about 55°C. Subsequently, the solution is homogenised after which the pH is adjusted with 8% sodium hydroxide or other food-grade base. The pH is adjusted to about neutral to obtain the clear dairy drink of the invention. After pH adjustment to neutral, an optional additional homogenisation treatment may be performed on the drink.

The transparency of thus obtained drink can be determined by measuring the extinction at 654 nm.

### EXAMPLE 2

### Determination of optimal pH

The mixture used in this series of experiments contains water instead of fruit concentrate. The pH was adjusted after homogenisation. Sample 5 was subjected to one or two extra homogenisation steps after 4 days storage at 4°C.

The results are shown in Table 1.

**Table 1**

| Sample | pH | extinction at 654 nm (fresh sample) | extinction at 654 nm (after 4 days at 4°C) | turbidity (visual) |
|---|---|---|---|---|
| 1 | 3.8 | 3.350 | n.d. | milky |
| 2 | 5.0 | 3.350 | n.d. | milky |
| 3 | 6.0 | 2.753 | 2.549 | opaque |
| 4 | 6.5 | 0.916 | 0.730 | transparent |
| 5 | 6.75 | 0.736 | 0.590 | transparent |
| 5a | 6.75* | n.d. | 0.196 | clear |
| 5b | 6.75** | n.d. | 0.189 | clear |
| 6 | 7.0 | 0.939 | 0.785 | transparent |

| | | | | |
|---|---|---|---|---|
| * one additional homogenisation step at 250 bar | | | | |
| ** two additional homogenisation steps at 250 bar | | | | |

From the table it follows that the appearance of the drink changes significantly in the pH range of 6 to 6.5. At a pH below 6 the drink is still milky, whereas it becomes transparent at a pH 6.5 or higher. The optimal pH in this setting is 6.75. It is found that extra homogenisation steps further improve the transparency.

The extinction of sample 5b was determined at a range of wavelengths varying from 400 to 800 nm. The results are given in Table 2.

| Wavelength (nm) | Extinction |
|---|---|
| 400 | 1.0157 |
| 425 | 0.833 |
| 450 | 0.6947 |
| 475 | 0.5741 |
| 500 | 0.4661 |
| 525 | 0.3923 |
| 550 | 0.3373 |
| 575 | 0.2916 |
| 600 | 0.2546 |
| 625 | 0.2237 |
| 650 | 0.1981 |
| 675 | 0.176 |
| 700 | 0.175 |
| 725 | 0.1402 |
| 750 | 0.1264 |
| 775 | 0.1146 |
| 800 | 0.1144 |

From the table it follows that at a wavelength above 400 up till 800 nm the extinction of this drink is below 1.

Sample 5a from this example was subjected to microfiltration over a 0.2 µm filter. The extinction of the drink was reduced from 0.196 to 0.087.

### EXAMPLE 3

### Effect of temperature of the drink on transparency

The recipe for 1 kg milk drink of the invention is as follows.

4 g Pectin and 20 g sugar are mixed in dry form. The mixture thus obtained is dispersed in 267 g water at 80°C in a vortex and hydrated at the same temperature for 2 hours.

605 g skimmed UHT-milk is cooled to 4°C and 24 g sugar is added. The milk/sugar solution and pectin/sugar solution are mixed leading to a temperature of 20-25°C. The solution thus obtained is quickly cooled to 4°C in ice water.

An additional amount of either 80 g fruit concentrate or water is added. 20% (W/w) citric acid was added until a pH of 4 was reached.

After a pasteurisation treatment during 15 sec. at 90°C, the solution is cooled to about 55°C. Subsequently, the solution is homogenised twice at 200 bar and 55°C using a Rannie laboratory homogeniser. After cooling to 5°C the pH is adjusted with 8% sodium hydroxide to 6.75.

The drink thus obtained was once more homogenised at 100 bar. The extinction of the solution after 24 hours was 0.162. This drink was used for further experiments.

10 ml of the drink was filled in test tubes and where heated during 7 and 20 min. at 35, 45 and 55°C. Immediately after the heat treatment the tubes were cooled in ice and visually analysed. After 24 hours the extinction at 654 nm was determined. The results are given in table 3.

**Table 3**

| Sample No. | heating | | turbidity (visual) | | Extinction at 654 nm |
|---|---|---|---|---|---|
| | t₍ₘᵢₙ₎ | T_{(°C)} | immediately after heating | after 24 hours at 4°C | after 24 hours |
| 1 (reference) | | <2 | transparent | transparent | 0.137 |
| 2 | 7 | 35 | transparent | transparent | 0.127 |
| 3 | 20 | 35 | transparent | transparent | 0.188 |
| 4 | 7 | 45 | milky white | transparent | 0.155 |
| 5 | 20 | 45 | milky white | transparent | 0.359 |
| 6 | 7 | 55 | milky white | transparent | 0.186 |
| 7 | 20 | 55 | milky white | transparent | 0.349 |

From the above table it follows that heating the samples leads to a turbidity that is reversed when the samples are stored in the fridge.

### EXAMPLE 4

### Standard recipe for clear dairy drink using rehomogenisation

Ingredients (for 1 kg drink):
4 g pectin (JM 150; Hercules - Copenhagen (Denmark))
44 g sugar (Kristalsuiker; CSM)
605 g milk (UHT-skim milk; Stabilac)
80 g fruit concentrate (Red-fruit concentrate; Dohler Euro Citrus; Belgium)
citric acid (Merck) (20% (w/w) solution)
8% sodium hydroxide solution
267 g water (process water)

### Recipe

The pectin is first mixed with 20 g sugar The pectin/sugar blend is dispersed in 267 g water of 80°C and allowed to hydrate for 2 hours. 24 g sugar is dissolved in cooled UHT-milk (4°C). The pectin solution and milk solution are mixed and cooled to 4°C using a counterflow chiller. The fruit concentrate is then added to the cooled mix. The pH of the total mix is adjusted to 4 with 20% (w/w) citric acid.

The acidified mix is subjected to streaming pasteurisation at 85°C for 10 sec and immediately cooled to 55°C using a counterflow chiller. Subsequently the mix is homogenised at 250 bar at 55°C using a Ranny homogeniser (APV) and cooled to 7°C. The pH is increased to 6.75 by addition of 8% sodium hydroxide and the neutral drink is homogenised at 250 bar at room temperature.

### EXAMPLE 5

### Standard recipe for clear dairy nutritional drink

By adding for example a glutamine peptide preparation (such as WGE80GPA, DMV International, Veghel, NL) to the recipe of Example 3, a nutritional drink can be obtained.

### EXAMPLE 6

### Extinction of clear dairy drinks of the invention at various wavelengths

In order to establish whether the extinction of the drinks of the invention is dependent on the wavelength used for excitation, three drinks of pH 6.5, 6.75 and 7.0 were measured at various wavelengths.

The results are summarised in Table 4.

**Table 4**

| wavelength (nm) | pH=6.5 | pH=6.75 | pH=7.0 |
|---|---|---|---|
| 700 | 0,2138 | 0,1864 | 0,3027 |
| 705 | 0,2099 | 0,1834 | 0,2977 |
| 710 | 0,2061 | 0,1802 | 0,2928 |
| 715 | 0,2024 | 0,1771 | 0,288 |
| 720 | 0,1988 | 0,1738 | 0,2834 |
| 725 | 0,1951 | 0,1708 | 0,2787 |
| 730 | 0,1915 | 0,1679 | 0,2743 |
| 735 | 0,1878 | 0,1648 | 0,2697 |
| 740 | 0,1845 | 0,162 | 0,2655 |
| 745 | 0,1816 | 0,1594 | 0,262 |
| 750 | 0,1787 | 0,1565 | 0,2586 |
| 755 | 0,1755 | 0,1535 | 0,2551 |
| 760 | 0,1727 | 0,1509 | 0,2519 |
| 765 | 0,1701 | 0,1486 | 0,2486 |
| 770 | 0,1676 | 0,1465 | 0,2454 |
| 775 | 0,1651 | 0,1445 | 0,2423 |
| 780 | 0,1624 | 0,1423 | 0,239 |
| 785 | 0,1599 | 0,1403 | 0,2358 |
| 790 | 0,1577 | 0,1382 | 0,2325 |
| 795 | 0,1554 | 0,1362 | 0,229 |
| 800 | 0,1532 | 0,134 | 0,2262 |

### EXAMPLE 7

### Preparation of a clear dairy drink using LM type pectin

Instead of HM pectin used so far, the effect of LM pectin was determined.

Two drinks were prepared, having 0.5 and 1 gram LM pectin per litre drink, respectively.

The pectin (LM pectin, type GENU LM 106 AS-YA; Hercules, Copenhagen (Denmark) and 20 g sugar are mixed in dry form. The mixture obtained is dispersed in 267 g water at 80°C in a vortex and hydrated at the same temperature for 2 hours.

605 g skimmed UHT milk is cooled to 4°C and 24 g sugar is added. The milk/sugar solution and the pectin/sugar solution are mixed leading to a temperature of 20-25°C. The solution obtained is quickly cooled to 4°C in ice water. An additional amount of 80 grams of water is added. Then, 20 % (w/w) citric acid was added until a pH of 4 was reached (the temperature is still 4°C). Subsequently the pH was raised again to 6.75 using 8 % NaOH.

In table 5 below, the extinction of the drinks obtained is listed.

**Table 5**

| LM pectin concentration in the drink (w/w %) | Appearance at pH 6.75 | Extinction |
|---|---|---|
| 0.05 | Clear | 0.099 |
| 0.1 | Clear | 0.098 |

From these results it can be concluded that LM pectin is also a suitable pectin type for preparing clear dairy drinks according to the invention.

Also it can concluded that a homogenisation step can be omitted in the process.

## Claims

1. Clear dairy drink, comprising a milk product as the main ingredient and having an extinction measured in a quartz cell having an optical path length of 1 cm in the range of 400 to 800 nm, in particular at 654 nm of less than 1.

2. Clear dairy drink as claimed in claim 1, having an extinction in the range of 400 to 800 nm, in particular at 654 nm of less than 0.8.

3. Clear dairy drink as claimed in claim 2, having an extinction in the range of 400 to 800 nm, in particular at 654 nm of less than 0.6.

4. Clear dairy drink as claimed in claim 3, having an extinction in the range of 400 to 800 nm, in particular at 654 nm of less than 0.4.

5. Clear dairy drink as claimed in claim 4, having an extinction in the range of 400 to 800 nm, in particular at 654 nm of less than 0.2.

6. Method for producing a clear dairy drink as claimed in claims 1-5 comprising the steps of:
a) providing a mixture of acid pH, which comprises a negatively charged polysaccharide and a milk product;
b) optionally subjecting the mixture to a temperature treatment and/or homogenisation, and
c) adjusting the pH of the mixture to about neutral.

7. Method as claimed in claim 6, wherein the provision of the mixture of acid pH is achieved by mixing pectin and milk and adjusting the pH of the mixture to about 3.8 to 4.2, preferably to about 4.

8. Method as claimed in claim 6, wherein the provision of the mixture of acid pH is achieved by mixing pectin and butter milk or yoghurt.

9. Method as claimed in claims 6-8, wherein the mixture further comprises one or more of the ingredients selected from the group consisting of sugars, fruit juice, fruit mix, food-grade acids, stabilisers, flavours, colorants, non-caloric sweeteners, maltodextrins, non-digestible fibers, nutritional ingredients.

10. Method as claimed in claims 6-9, wherein the negatively charged polysaccharide is selected from the group consisting of pectin, alginate, carboxy methyl cellulose and polyglycol alginate, and is preferably pectin.

11. Method as claimed in claims 6-10, wherein the temperature treatment is a pasteurisation treatment.

12. Method as claimed in claim 11, wherein the pasteurisation treatment is a treatment of 10-20 sec., preferably 15 sec. at 85-95°C, preferably 90°C.

13. Method as claimed in claim 6, wherein the homogenisation is performed at 150-250 bar, preferably 250 bar.

14. Method as claimed in claim 13, wherein the homogenisation is performed more than once.

15. Method as claimed in claims 6-14, wherein the about neutral pH is a pH between about 6 and 7.5, preferably about 6.5 and 7, more preferably about 6.75.

16. Method as claimed in claims 6-15 further comprising as a step d) one ore more homogenisation steps.

17. Method as claimed in claim 16, wherein the homogenisation is performed at 150-250 bar, preferably 250 bar.

18. Method as claimed in claims 6-17, wherein the drink is cooled prior to step c).

19. Method as claimed in claims 6-17, wherein the drink is cooled after step c).

20. Method as claimed in claims 16 and 17, wherein the drink is cooled prior to step d).

21. Method as claimed in claims 16 and 17, wherein the drink is cooled after step d).

22. Clear dairy drink obtainable by a method as claimed in claims 6-21.

23. Clear dairy drink as claimed in claim 22, further comprising nutritional components, such as amino acid preparations, in particular a glutamine peptide preparation.

24. Clear dairy drink as claimed in claim 22, further comprising lactic acid bacteria and/or probiotic bacteria.
